Europäisches Patentamt

European Patent Office

Office européen des brevets

(19)

(11) Veröffentlichungsnummer: **0 333 903**
**A1**

## EUROPÄISCHE PATENTANMELDUNG

(12)

(21) Anmeldenummer: 88104677.5

(22) Anmeldetag: 23.03.88

(51) Int. Cl.⁴: **B29B 13/02**

(43) Veröffentlichungstag der Anmeldung:
27.09.89 Patentblatt 89/39

(84) Benannte Vertragsstaaten:
**AT BE CH DE ES FR GB GR IT LI LU NL SE**

(71) Anmelder: **Claassen, Henning J.**
**Industriegebiet Hafen**
**D-2120 Lüneburg(DE)**

(72) Erfinder: **Claassen, Henning J.**
**Industriegebiet Hafen**
**D-2120 Lüneburg(DE)**

(74) Vertreter: **Dipl.-Ing. Schwabe, Dr. Dr.**
**Sandmair, Dr. Marx**
**Stuntzstrasse 16**
**D-8000 München 80(DE)**

(54) **Schmelzbehälter für thermoplastische, hochpolymere Werkstoffe.**

(57) Ein Schmelzbehälter für thermoplastische, hochpolymere Werkstoffe mit Seitenwänden weist mindestens einen Rost (42, 44) auf, der als getrenntes
Bauteil ausgebildet und herausnehmbar in dem
Schmelzbehälter angeordnet ist.

FIG. 1

## Schmelzbehälter für thermoplastische, hochpolymere Werkstoffe

Die Erfindung betrifft einen Schmelzbehälter für thermoplastische, hochpolymere Werkstoffe, insbesondere Klebstoffe, der im Oberbegriff des Anspruchs 1 angegebenen Gattung.

Ein solcher Schmelzbehälter geht aus der DE-PS 28 36 545 hervor und weist Seitenwände, die dem Schmelzbehälter im allgemeinen Quader- oder Zylinderform geben, sowie einen als Schmelzrost ausgebildeten, durchbrochenen Boden auf. Unter dem Bodem befindet sich eine Auffangwanne, aus der der verflüssigte, hochpolymere Werkstoffe über eine Pumpe dem Auslaß und damit der Weiterverarbeitung, bspw. über einen Schlauch einem Auftragkopf, zugeführt wird.

Unter dem Schmelzbehälter ist die Auffangwanne angeordnet, die durch eine Wärmeisolierung von dem Schmelzbehälter getrennt ist. Schmelzbehälter und Auffangwanne sind miteinander verschraubt, so daß sie, bspw. zu Reinigungs zwekken, demontiert und voneinander getrennt werden können.

Nachteilig ist bei diesem Schmelzbehälter die relativ umständliche, mühsam und deshalb zeitaufwendige Reinigung. Dies gilt insbesondere dann, wenn der einstückige Vorratsbehälter von der Auffangwanne getrennt werden muß, da hierbei die erforderlichen elektrischen Verbindungen zu den Heizelementen in dem Rost stören.

Ein weiteres Problem liegt bei dem bekannten Schmelzbehälter darin, daß die Wärmezufuhr im wesentlichen über die Heizelemente in den Stegen des Rostes erfolgt. Der in dem Schmelzbehälter befindliche Werkstoff wird also nur von unten, nämlich vom Boden des Behälters her, erwärmt, so daß die gewünschte, exakte Temperaturführung des Schmelzvorganges problematisch wird.

Der Erfindung liegt deshalb die Aufgabe zugrunde, einen Schmelzbehälter der angegebenen Gattung zu schaffen, bei dem die oben erwähnten Nachteile nicht auftreten. Insbesondere soll ein Schmelzbehälter vorgeschlagen werden, der eine sehr exakte Temperaturführung des Schmelzvorgangs ermöglicht.

Dies wird erfindungsgemäß durch die im kennzeichnenden Teil des Anspruchs 1 angegebenen Merkmale erreicht.

Zweckmäßig Ausführungsformen werden durch die Merkmale der Unteransprüche definiert.

Die mit der Erfindung erzielten Vorteile beruhen auf dem lösbaren, form-und/oder kraftschlüssigen Einhängen der als getrennte Bauteile ausgeführten Roste in den Schmelzbehälter, so daß jeder Rost mit einem einfachen Handgriff herausgezogen werden kann. Dadurch wird das Innere des Schmelzbehälters frei zugänglich, so daß auch eine sorgfältige Reinigung rasch, mühelos und in kurzer Zeit durchgeführt werden kann.

Dieser Rost enthält keine Heizelemente mehr, so daß auch keine Verbindungsleitungen die Herausnahme des Rostes und/oder die Reinigung stören können. Der Rost wird Heizelementen in den Seitenwänden des Schmelzbehälters her erwärmt, so daß ein guter Wärmeübergang zwischen den Wänden des Schmelzbehälters und dem Rost gewährleistet sein muß. Dies kann durch entsprechende Ausgestaltung der Anlageflächen von Rost und Seitenwand erreicht werden.

Nach einer bevorzugten Ausführungsform ist die Innenfläche der Seitenwände mit einer nach innen vorstehenden, leicht abgeschrägten Schulter ausgebildet, an der eine entsprechend geformte Seitenfläche des Rostes anliegt, so daß sich ein einfach zu realisierender, formschlüssiger Eingriff zwischen Seitenwand und Rost ergibt. Zur Entnahme des Rostes muß dieser dann nur noch einfach nach oben herausgehoben werden; zu diesem Zweck sind an der Oberseite des Rostes halbkreisförmige Ringe ausgebildet, die man mit einem Finger erfassen und dadurch den Rost herausheben kann.

Um den Wärmeübergang am Rost und damit die Temperaturführung des Schmelzvorgangs zu variieren, können Roste aus verschiedenen Materialien mit unterschiedlichem Wärmeleitfähigkeiten eingesetzt werden.

Als Alternative hierzu ist es auch möglich, den Rost auf unterschiedlichen Höhen in dem Schmelzbehälter anzuordnen; dadurch wird dem in dem Schmelzbehälter befindlichen, noch nicht geschmolzen Werkstoff Wärme von dem Rost an unterschiedlichen Stellen zugeführt, wodurch sich unterschiedliche Abläufe des Schmelzvorgangs realisieren lassen.

Wird eine besonders hohe Wärmekapazität benötigt, so können auch mehrere Roste vertikal übereinander angeordnet werden, um den in dem Schmelzbehälter befindlichen Werkstoff auf verschiedene Höhen Wärme zuzuführen und damit auch kurzfristig hohe Leistungsanforderungen zu befriedigen.

Da diesem Schmelzbehälter die Wärme nur von den Seitenwänden bzw. vom Boden her, jedoch nicht von dem Rost her, zugeführt wird, kann der Behälter einstückig mit der darunter befindlichen Auffangwanne ausgebildet werden, wodurch sich eine Vereinfachung der Fertigung ergibt.

Die Erfindung wird im folgenden anhand von Ausführungsbeispielen unter Bezugnahme auf die beiliegenden, schematischen Zeichnungen näher erläutert. Es zeigen

Fig. 1 einen Vertikal-Mittelschnitt durch eine Vorrichtung zum Verflüssigen bzw. Schmelzen eine thermoplastischen, hochpolymeren Werkstoffes, insbesondere eines Klebstoffes, in deren Symmetrieebene,

Fig. 2 eine Ansicht in Richtung des Pfeils A von oben auf den Schmelzbehälter, und

Fig. 3 im vergrößerten Maßstab eine Darstellung der Einzelheit X von Figur 1.

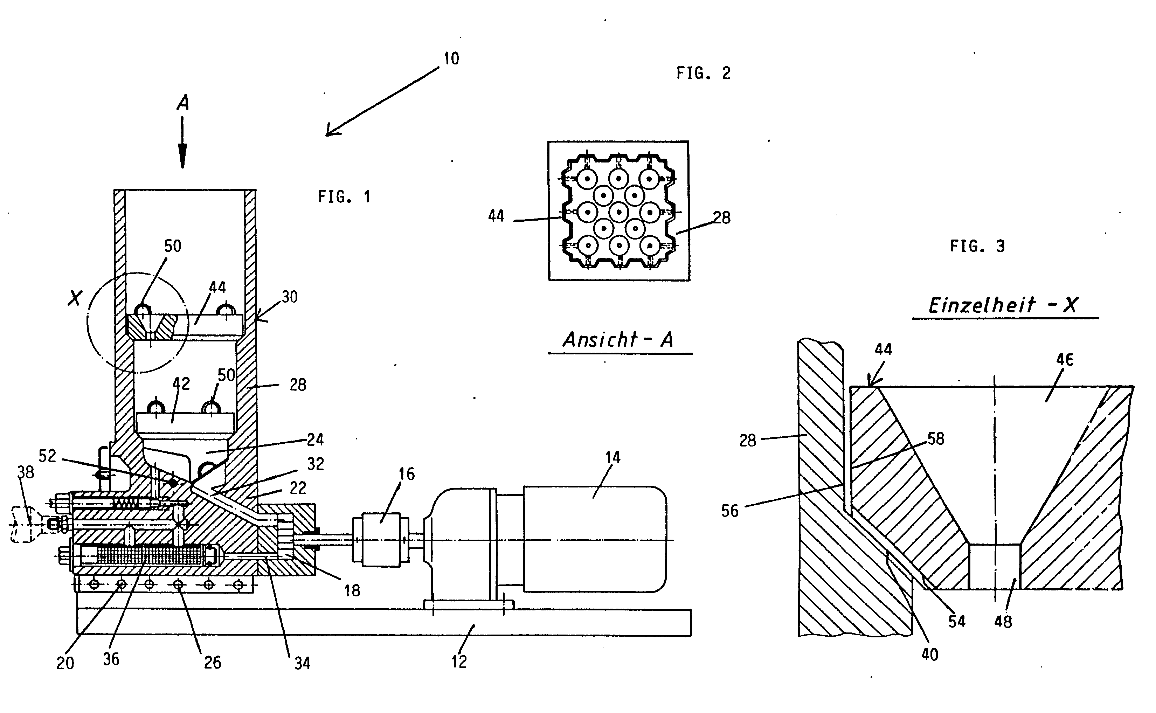

Die aus Figur 1 ersichtliche, allgemein durch das Bezugzeichen 10 angedeutete Vorrichtung zum Schmelzen bzw. Verflüssigen eines thermoplastischen, hochpolymeren Werkstoffes, insbesondere eines Klebstoffes, weist eine Grundplatte 12 auf, die einen elektrischen Antriebsmotor 14 mit einem vorgeschalteten Getriebe 16 zum Antreiben einer Zahnradpumpe 18 trägt.

Auf der Grundplatte 12 ist über einer Tragplatte 20 eine Auffangwanne 22 mit einer Mulde 24 für den auf die Arbeitstemperatur erwärmten und verflüssigten Klebstoff angeordnet. In der Tragplatte 20 oder der Auffangwanne 22 befinden sich in den entsprechenden Bohrungen elektrische Widerstandheizstäbe 26, die zum Erwärmen der Auffangwanne 22, der einstückig damit ausgebildeten Seitenwände 28 des Schmelzbehälters 30 und des Inhalts der Auffangwanne 22 auf die gewünschte Endtemperatur dienen.

Von der Mulde 24 der Auffangwanne 22 führt eine Leitung 32 zu der nur schematisch angedeuten Zahnradpumpe 18, die den verflüssigten Klebstoff über eine weitere Leitung 34 und eine Filterpatrone 36 zum Auslaß 38 bringt.

An die Leitung von der Filterpatrone 36 zu dem Auslaß 38 ist eine übliche Rückführleitung zur Mulde 24 angeschlossen, die bei normalem Betrieb durch ein von einer Feder vorgespanntes Sicherheitsventil geschlossen ist. Bei Übersteigen eines vorgegebenen Drucks auf der Auslaßleitung öffnet sich das Ventil, so daß der verflüssigte Klebstoff im Kreislauf gefördert und wieder der Mulde 24 zugeführt wird.

Der Auslaß 38 ist über einen Schlauch, dessen Ende schematisch angedeutet ist, mit der eigentlichen Auftragvorrichtung, bspw, einem Sprühkopf oder einem Auftragkopf, verbunden.

Wie man aus der Aufsicht nach Figur 2 erkennt, hat der Schmelzbehälter 30 einen quadratischen Querschnitt; als Alternative hierzu kann jedoch auch ein rechteckiger oder zylindrischer Querschnitt verwendet werden.

Bei der dargestellten Ausführungsform sind die Innenflächen der Seitenwände 28 des Schmelzbehälters 30 mit zwei vertikal übereinander angeordneten, nach innen vorstehenden, leicht abgeschrägten Schultern 40 (siehe Figur 3) versehen, die jeweils als Auflagefläche für einen Rost 42 bzw.

44 dienen. Wie man aus den Figuren 2 und 3 erkennt, weist ein solcher Rost 42, 44 eine Reihe von Durchbrüchen 46 auf, die Trichterform haben, sich also nach unten hin verjüngen und dann in eine Öffnung 48 mit gleichmäßigen, kreisförmigem Querschnitt übergehen, aus der der flüssige Schmelzkleber in dem Vorratsbehälter 30 nach unten und schließlich in die Mulde 24 der Auffangwanne 22 tropft.

Wie in der DE-PS 28 36 545 erläutert wird, stehen für die räumliche Anordnung und Form der Durchbrüche verschiedene Ausführungsformen zur Verfügung, wobei auf einen guten Wärmeübergang zwischen dem Rost 44, 42 und dem Klebstoff geachtet werden muß.

Die Außenseite jedes Rostes hat eine der Form des Innenquerschnittes der Seitenwände 28 sowie der Schulter 40 angepaßte Form, wie man aus den Figuren 2 und 3 erkennt, so daß jeder Rost 42, 44 nur frei auf der Schulter 40 des Schmelzbehälters 28 aufliegt und nach oben aus dem Schmelzbehälter 30 herausgehoben werden kann. Zu diesem Zweck sind an der Oberseite jedes Rostes 42, 44 halbkreisförmige Ringe 50 ausgebildet, in die man mit einem finger hereingreifen und dadurch den zugehörigen Rost 42, 44 nach oben aus dem Schmelzbehälter 30 herausheben kann.

Bei der dargestellten Ausführungsform sind, wie erwähnt, zwei Roste 42, 44 vertikal übereinander in dem Schmelzbehälter 30 angeordnet; um die Entnahme beider Roste zu ermöglichen, muß selbstverständlich der obere Rost 44 und die zugehörige Schulter 40 des Schmelzbehälters 30 einen größeren Durchmesser haben als der untere Rost 42 und die zugehörige Schulter 40 des Schmelzbehälters.

Die Wärmezufuhr zu dem Klebstoff in dem Schmelzbehälter 30 erfolgt über die Heizelemente 26 am Boden der Auffangwanne 22, weitere, nicht im einzelnen dargestellte Heizelemente im oberen Teil der Auffangwanne 22, von denen nur das Heizelement 52 gezeigt ist, und gegebenenfalls noch durch zusätzliche Heizelemente in den Seitenwänden 28 des Schmelzbehälters 30. Die Roste selbst enthalten keine Heizelemente, so daß für einen guten Wärmeübergang zwischen den Seitenwänden 28 des Schmelzbehälters 30 und den Rosten 42, 44 gesorgt werden muß. Dies wird durch die aus Figur 2 ersichtliche Form der Außenwand des Rostes 42,44 in Verbindung mit relativ großen Kontaktflächen zwischen Rost 42, 44 und Seitenwand 28 erreicht, wie in Figur 3 dargestellt ist; diese Kontaktfläche erstreckt sich also nicht nur auf die Anlage zwischen der Schulter 40 und der entsprechenden Gegenfläche 54 am Außenrand des Rostes, sondern auch auf den Kontakt zwischen dem anschließenden Flächen 56, 58 von Rost 42, 44 und Schmelzbehälter 30.

Und schließlich hat der Außenrand jedes Rostes 42,44 und die entsprechende Gegenwand des Schmelzbehälters 30 die aus Figur 2 ersichtliche, relativ komplizierte Form mit vielen Vorsprüngen und Aussparungen, wodurch sich ebenfalls eine große Kontaktfläche und damit ein guter Wärmeübergang ergeben.

Die heutigen, modernen Vakuumgießverfahren ermöglichen auch die Herstellung so komplizierter Roste in einem einzigen Arbeitsgang, so daß im Prinzip nur noch zwei getrennte Teile erforderlich sind, nämlich der einstückig mit der Auffangwanne 22 ausgebildete Schmelzbehälter 30 und der bzw. jeder Rost 42, 44.

Die Roste können, wie erwähnt, problemlos herausgenommen werden, so daß sich der Schmelzbehälter 30 einfach reinigen läßt. Es ist auch möglich, Roste 42, 44 aus unterschiedlichen Materialien zu verwenden, um bestimmte Wärmeeffekte zu erzielen.

Zum gleichen Zweck kan auch die Zahl der Roste 42, 44 variiert werden, d.h. es kann nur ein einziger Rost, bspw. der untere rost 42, oder noch zusätzliche Roste vorgesehen werden, indem noch mehr Roste vertikal übereinander angeordnet werden.

Die Innenflächen der Seitenwände 28 des Schmelzbehälters 30 und/oder die Außenflächen des bzw. jeden Rostes 42, 44 können mit einem geeigneten Mittel beschichtet werden, bspw. einer Wärmeleitungspaste, um den Wärmeübergang zwischen Rost 42, 44 und Seitenwand 28 zu verbessern, oder aber mit einem Antihaftmittel, um auszuschließen, daß der geschmolzene Klebstoff, insbesondere aber der abgekühlte, aushärtende Klebstoff an dem bzw. jedem Rost 42, 44 und/oder dem Schmelzbehälter 30 haftet. Hierfür kommen Polytetrafluorethylen (PTFE) oder Polyfluorethylen (PFE) in Frage.

**Ansprüche**

1. Schmelzbehälter für thermplastische, hochpolymere Werkstoffe, insbesondere Klebstoffe,
   a) mit Seitenwänden, und
   b) mit einem als Rost ausgebildeten Boden,
**dadurch gekennzeichnet, daß**
   c) mindestens ein Rost (42, 44) als getrenntes Bauteil ausgebildet ist, und daß
   d) der bzw. jeder Rost (42, 44) herausnehmbar in dem Schmelzbehälter (39) angeordnet ist.

2. Schmelzbehälter nach Anspruch 1, dadurch gekennzeichnet, daß der bzw. jeder Rost (42, 44) kraft- und/oder formschlüssig mit den Seitenwänden (28) verbunden ist.

3. Schmelzbehälter nach einem der Ansprüche 1 oder 2, dadurch gekennzeichnet, daß die Innenflächen der Seitenwände (28) und/oder der bzw. jeder Rost (42, 44) mit einer Oberflächenbeschichtung versehen sind.

4. Schmelzbehälter nach Anspruch 3, dadurch gekennzeichnet, daß als Oberflächenbeschichtung eine Wärmeleitungspaste oder ein Antihaftmittel vorgesehen sind.

5. Schmelzbehälter nach Anspruch 4, dadurch gekennzeichnet, daß als Antihaftmittel Polytetrafluorethylen (PTFE) oder Polyfluorethylen (PFE) verwendet werden.

6. Schmelzbehälter nach einem der Ansprüche 1 bis 5, dadurch gekennzeichnet, daß die Seitenwände (28) einstückig mit einer Auffangwanne (22) ausgebildet, insbesondere aus einem Stück mit der Auffangwanne (22) gegossen sind.

7. Schmelzbehälter nach einem der Ansprüche 1 bis 6, dadurch gekennzeichnet, daß der bzw. jeder Rost (42, 44) auf einer umlaufenden Schulter (40) an den Innenflächen der Seitenwände (28) aufliegt.

8. Schmelzbehälter nach einem der Ansprüche 1 bis 7, dadurch gekennzeichnet, daß der bzw. jeder Rost (42, 44) mit einem Griff (50) versehen ist.

9. Schmelzbehälter nach einem der Ansprüche 1 bis 8, dadurch gekennzeichnet, daß durch entsprechende Formbegung der Außenfläche des bzw. jedes Rostes (42, 44) eine große Kontaktfläche Rost/Seitenwand errecht wird.

FIG. 2

FIG. 1

50

X

44

30

42

50

28

52

24

38

32

22

16

14

18

20  36  26  34

12

Ansicht - A

44

28

FIG. 3

Einzelheit - X

44

46

28

58

56

54  48

40

EP 0 333 903 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 589 417 (E. MITTELMANN) <br> * Spalte 5, Zeilen 50-55; Figur 1; Spalte 3, Zeilen 53-55,72-75 * <br> --- | 1,2,7 | B 29 B 13/02 |
| A | US-A-1 949 103 (H.E. KETTLEWELL et al.) <br> * Seite 2, Zeilen 16-29; Figur 7 * <br> --- | 6 | |
| A | FR-A-2 510 431 (NORDSON CORP.) <br> * Seite 1, Zeilen 1-5; Seite 3, Zeilen 1-30; Seite 6, Zeilen 10-15; Seite 10, Zeilen 21-38; Anspruch 9; Figuren 2,3 * <br> --- | 3-5 | |
| A,D | FR-A-2 434 019 (H.J. CLAASEN) <br> & DE-C-2 836 545 <br> --- | | |
| A | US-A-2 868 420 (T.A. WEISZ) <br> --- | | |
| A | FR-A-1 139 943 (J.S. KAMBORIAN) <br> ----- | | |

RECHERCHIERTE SACHGEBIETE (Int. Cl.4)

B 29 B 13/00
D 01 D 1/00
E 01 C 19/00
C 10 C 3/00
F 16 N 39/00

Der vorliegende Recherchenbericht wurde für alle Patentansprüche erstellt

| Recherchenort | Abschlußdatum der Recherche | Prüfer |
|---|---|---|
| DEN HAAG | 15-11-1988 | MOLTO PINOL F.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................................................
& : Mitglied der gleichen Patentfamilie, übereinstimmendes Dokument